# EUROPEAN PATENT APPLICATION

(11) **EP 3 226 157 A1**
(43) Date of publication of application: **04.10.2017**
(21) Application number: 17163145.0
(22) Date of filing: 27.03.2017
(51) Int. Cl.: G06F 17/30, G01S 19/14

(54) **INTERACTIVE MAP INTERFACE DEPICTING USER ACTIVITY**

(30) Priority: 28.03.2016 US 201615082307
(71) Applicant: Palantir Technologies Inc., Palo Alto, CA 94301 (US)
(72) Inventor: HONG, Peter, Palo Alto, CA California 94301 (US); SPENCER-HARPER, Quentin, Palo Alto, CA California 94301 (US); WILCZYNSKI, Peter, Palo Alto, CA California 94301 (US)
(74) Representative: Potter, Julian Mark

(57) **Abstract**

In various example embodiments, a system and method for an interactive map interface that corresponds to user activity are provided. A plurality of data points are received. Each data point among the plurality of data points includes a geographical location component and a temporal component. A graphical user interface depicting a map of a geographical area that includes interface objects for each of the plurality of data points is generated. The generated graphical user interface is caused to be displayed on a client device. An indication of a user interaction with the graphical user interface is received from the client device. The plurality of data points are analyzed in accordance with the user interaction in order to generate a result in the graphical user interface.

## Description

### TECHNICAL FIELD

Embodiments of the present disclosure relate to generation and analysis of interface objects depicted in a user interface. More particularly, but not by way of limitation, the embodiments of the present disclosure relate to display of an interactive map interface on a screen that depicts information received by one or more sensor devices in communication with a server over a network.

### BACKGROUND

An activity of user may be measured by a sensor device and data regarding the activity may be generated by the sensor device. In some instances, the data includes location data and time data. However, often times, conventionally, this data is generated in bulk, leaving it difficult to measure or ascertain the significance of the data. In other words, by generating and storing the data in a database, without slicing through the data to identify patterns in the data, makes it difficult to understand the significance of the data.

### BRIEF DESCRIPTION OF THE DRAWINGS

Various ones of the appended drawings merely illustrate example embodiments of the present disclosure and cannot be considered as limiting its scope.
FIG. 1 is a block diagram illustrating a networked system, according to some example embodiments.
FIG. 2 is a block diagram illustrating components of an interface system, according to some example embodiments.
FIGS. 3-5 are flowcharts illustrating operations of the interface system in performing a method of analyzing data points in accordance with a user interaction, according to some example embodiments.
FIGS. 6-12 depict example user interfaces of a client device, according to some example embodiments.
FIG. 13 is an example user interface that depicts a dossier page, according to some example embodiments.
FIG. 14 is an example user interface of an interactive map, according to some example embodiments.
FIG. 15 is a flowchart illustrating an example architecture of a system that provides an interactive map interface, according to some example embodiments.
FIG. 16 illustrates a diagrammatic representation of a machine in the form of a computer system within which a set of instructions may be executed for causing the machine to perform any one or more of the methodologies discussed herein, according to an example embodiment.

### DETAILED DESCRIPTION

The description that follows includes systems, methods, techniques, instruction sequences, and computing machine program products that embody illustrative embodiments of the disclosure. In the following description, for the purposes of explanation, numerous specific details are set forth in order to provide an understanding of various example embodiments of the subject matter discussed herein. It will be evident, however, to those skilled in the art, that embodiments of the subject matter may be practiced without these specific details.

In various example embodiments, one or more data points are received by a system. The plurality of data points are generated from one or more sensor devices. Each data point includes location information and time information. Moreover, each data point corresponds to an activity or an action performed by a user that is measured by the one or more sensor devices.

The sensor device may include any device that is capable of capturing location information and time information (e.g., a device that communicates with Global Position System (GPS) satellites to receive the location information and that tracks time). Example sensor devices may be embodied within a mobile device, desktop computer, laptop, portable digital assistants (PDAs), smart phones, tablets, multi-processor systems, microprocessor-based or programmable consumer electronics, or any other communication device that has access to a networked system.

Once the plurality of data points are received, the system generates an interactive user interface that depicts the data points as interface objects in a map interface. An interface object is an object that is displayed in the map interface and that corresponds to a data point that is received. The interface object may take on various shapes or forms (e.g., circle, square, and triangle). Further, a user may interact with the interface object. In various example embodiments, the user may select the interface object and tag the data point represented by the interface object with additional information, as further explained below.

The user interface organizes and provides a visual depiction of the plurality of data points. For example, a user's morning exercise routine may be indicated by the data points. Further, the data points may be depicted as a group of interface objects in the map interface. As another example, the user's activities while at a workplace may be captured and indicated by a group of data points and depicted as interface objects in the map interface.

Once the system generates the interactive map interface, the map interface is displayed on a client device for any user to view. Users viewing the interactive map interface can interact with the map interface by selecting an area on the map interface, selecting an action from a menu, zooming in on the map, requesting analysis of the plurality of data points, and the like. Moreover, in response to user interaction with the map interface, an analysis is performed on the plurality of data points. Analysis may include generating a histogram that shows the distribution of the data points, generating a heat line diagram, generating a chart that shows a timeline of locations, identification of meeting points, identification of locations of interest, identifying anomalous trips, and the like. Once the analysis is complete, the generated result is displayed in the interactive map interface.

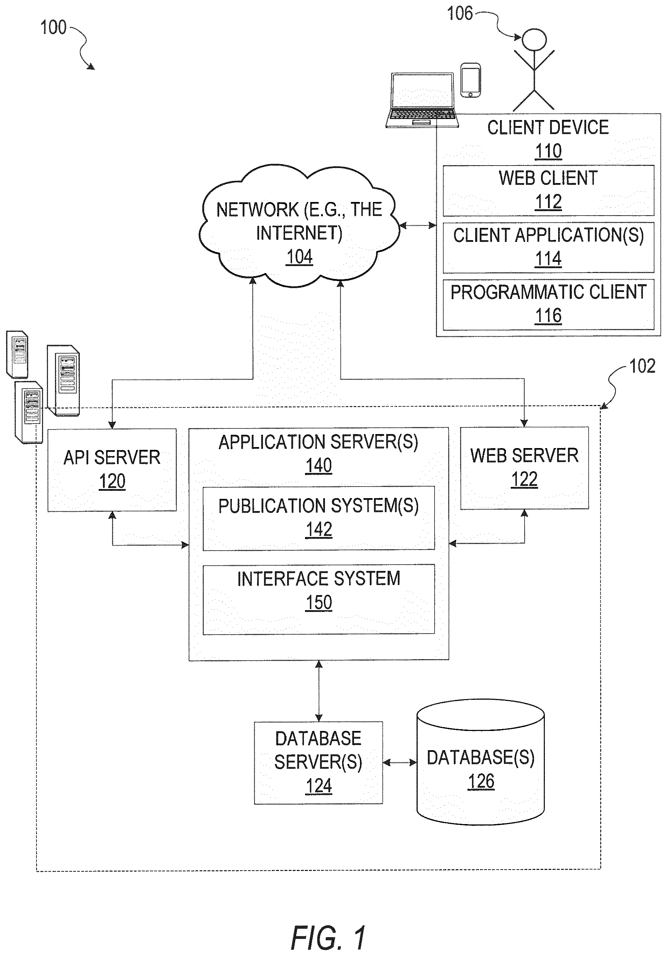

With reference to FIG. 1, an example embodiment of a high-level client-server-based network architecture 100 is shown. A networked system 102, in the example forms of a network-based publication system, provides server-side functionality via a network 104 (e.g., the Internet or wide area network (WAN)) to one or more client devices 110. FIG. 1 illustrates, for example, a web client 112 (e.g., a web browser), a client application 114, and a programmatic client 116 executing on the client device 110.

The web client 112 accesses a publication system 142 and an interface system 150 via the web interface supported by the web server 122. Similarly, the programmatic client 116 accesses the various services and functions provided by both the publication system 142 and the interface system 150 via the programmatic interface provided by the API server 120. The programmatic client 116 may, for example, be a map interface application to enable a user to access an interactive user interface hosted by the networked system 102 in an off-line manner, and to perform batch-mode communications between the programmatic client 116 and the networked system 102.

The client device 110 may comprise, but is not limited to, a mobile phone, desktop computer, laptop, portable digital assistants (PDAs), smart phones, tablets, laptops, multi-processor systems, microprocessor-based or programmable consumer electronics, game consoles, or any other communication device that a user may utilize to access the networked system 102. In some embodiments, the client device 110 comprises a display module (not shown) to display information (e.g., in the form of user interfaces). In further embodiments, the client device 110 may comprise one or more of a touch screens, accelerometers, gyroscopes, cameras, microphones, global positioning system (GPS) devices, and so forth. The client device 110 may be a device of a user that is used to interact with digital items within the networked system 102. In one embodiment, the networked system 102 is a network-based publication system that responds to requests for publications, and also publishes publications. For example, one or more portions of the network 104 may be an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, a wireless network, a WiFi network, a WiMax network, another type of network, or a combination of two or more such networks.

The client device 110 includes one or more applications (also referred to as "apps") such as, but not limited to, a web browser, messaging application, electronic mail (email) application, a map interface application, and the like. In some embodiments, if the map interface application is included in the client device 110, then the map interface application is configured to locally provide the user interface and at least some of the functionalities with the map interface application configured to communicate with the networked system 102, on an as needed basis, for data or processing capabilities not locally available (e.g., access to a database for retrieving a plurality of data points that are displayed in the user interface, to authenticate a user). Conversely if the map interface application is not included in the client device 110, the client device 110 may use its web browser to access the map interface application hosted on the networked system 102.

One or more users 106 may be a person, a machine, or other means of interacting with the client device 110. In example embodiments, the user 106 is not part of the network architecture 100, but interacts with the network architecture 100 via the client device 110 or other means. For instance, the user 106 provides input (e.g., touch screen input or alphanumeric input) to the client device 110 and the input is communicated to the networked system 102 via the network 104. In this instance, the networked system 102, in response to receiving the input from the user 106, communicates information to the client device 110 via the network 104 to be presented to the user 106. In this way, the user 106 can interact with the networked system 102 using the client device 110.

An application program interface (API) server 120 and a web server 122 are coupled to, and provide programmatic and web interfaces respectively to, one or more application servers 140. The application servers 140 hosts one or more publication systems 142 and an interface system 150, each of which may comprise one or more modules or applications and each of which may be embodied as hardware, software, firmware, or any combination thereof. The application servers 140 are, in turn, shown to be coupled to one or more database servers 124 that facilitate access to one or more information storage repositories or database(s) 126. In an example embodiment, the databases 126 are storage devices that store information to be posted (e.g., publications or listings) to the publication system 142. The databases 126 may also store digital item information in accordance with example embodiments.

The publication systems 142 provide a number of publication functions and services to users 106 that access the networked system 102. In various example embodiments, the publication systems 142 or the interface system 150 each provide maps that depict certain geographical areas. The interface system 150 provides an interactive map interface that corresponds to user activities. In this regard, the interface system 150 may access user activity data from the databases 126, the publication system 142, and other sources. In some example embodiments, the interface system 150 may analyze the user activity data in accordance with user interactions. In some example embodiments, the interface system 150 communicates with the publication systems 142 (e.g., access published content, map, graphics, data pertaining to user activities). In an alternative embodiment, the interface system 150 may be a part of the publication system 142.

Further, while the client-server-based network architecture 100 shown in FIG. 1 employs a client-server architecture, the present inventive subject matter is of course not limited to such an architecture, and could equally well find application in a distributed, or peer-to-peer, architecture system, for example. The publication system 142 and interface system 150 can also be implemented as standalone software programs, which do not necessarily have networking capabilities.

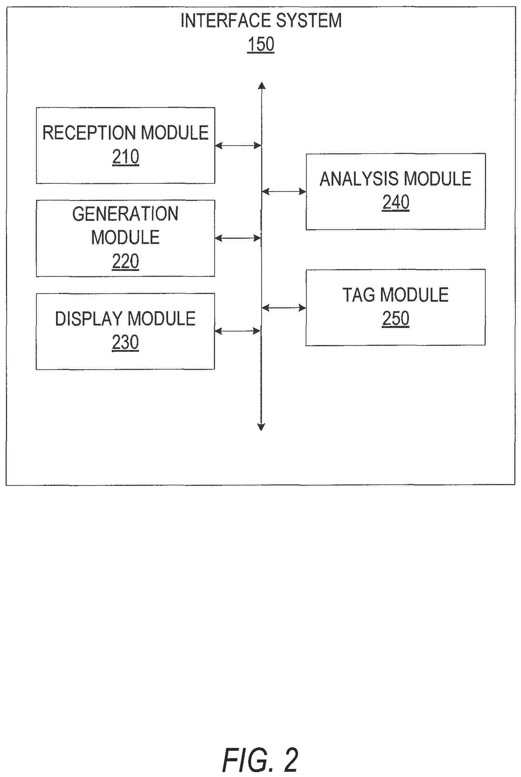

FIG. 2 is a block diagram illustrating components of the interface system 150, according to some example embodiments. The interface system 150 is shown as including a reception module 210, a generation module 220, a display module 230, an analysis module 240, and a tag module 250, all configured to communicate with each other (e.g., via a bus, shared memory, or a switch). Any one or more of the modules described herein may be implemented using hardware (e.g., one or more processors of a machine) or a combination of hardware and software. For example, any module described herein may configure a processor (e.g., among one or more processors of a machine) to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

In various example embodiments, the reception module 210 is configured to receive a plurality of data points (e.g., interactive map data). In some instances, the plurality of data points is stored in a database (e.g., database 126). In this regard, the reception module 210 retrieves the plurality of data points from the database. In various example embodiments, each of the plurality of data points is generated by a respective sensor device. Accordingly, the reception module 210 is further configured to receive the plurality of data points from one or more sensor devices that generate the plurality of data points.

In various example embodiments, the reception module 210 receives the plurality of data points from a further system, such as the publication systems 142. The plurality of data points may be generated by the publication system 142 and stored in the database maintained by the publication system 142.

Each data point among the plurality of data points includes a geographical location component and a temporal component. In other words, each data point includes data that identifies a respective geographical location and data that identifies a respective time. Accordingly, the plurality of data points can be used to identify one or more geographical locations that correspond to one or more moments in time. In various example embodiments, each data point corresponds to a certain activity performed by a user at a specific location and at a specific time. Accordingly, one or more data points may indicate an event that takes place at a specific location and time and that is attended by one or more users.

In various example embodiments, each of the data points also includes device component. For a particular data point, the device component is used to identify a respective source device of (e.g., device being used to generate the particular data point). For instance, the device component may indicate a device identifier of the respective source device. If the source device is a mobile device, the identifier may be a telephone number of the mobile device. In further embodiments, the identifier may be a nickname assigned to the source device.

In further example embodiments, the reception module 210 receives communication data that indicates communications made between each of the sensor devices. In other words, the communication data may indicate instances in which a communication is made between a first sensor device and a second sensor device (e.g., phone, text, email).

In various example embodiments, the generation module 220 is configured to generate a graphical user interface depicting a map of a geographical area (also referred to herein as the "map interface"). Moreover, the geographical area corresponds to the plurality of data points received by the reception module 210. In further embodiments, the generation module 220 generates interface objects in the graphical user interface, the interface objects being representations of the plurality of data points. In other words, an interface object may be generated for each data point among the plurality of data points. Moreover, the interface objects may comprise of sets or groups of interface objects. As stated earlier, an interface object is an object that is displayed in the map interface. The interface object also corresponds to a data point that is received by the reception module 210. The interface object is embodied in various shapes or forms (e.g., circle, square, triangle, and the like). Further, a user may interact with the interface object. In various example embodiments, the user may select the interface object and tag the data point represented by the interface object with additional information.

In generating the graphical user interface, the generation module 220 may automatically switch between front-end and back-end processing. In other words, for large sets of data (e.g., the plurality of data points), the generation module 220 uses back-end processing to render the graphical user interface. For smaller sets of data (e.g., the plurality of data points), the generation module 220 uses front-end processing to render the graphical user interface.

Further, for a large number of data points that are heavily concentrated in a single area, the generation module 220 may reduce an amount of data being rendered or displayed in the generated graphical user interface without compromising a quality of resulting output in the graphical user interface. For example, if a large number of data points can still be represented using fewer data points, then the generation module 220 reduces the amount of data. This results in a fewer number of interface objects being displayed in the graphical user interface.

In various example embodiments, the display module 230 causes display of the generated graphical user interface on a screen of a client device. In order to accomplish this, the display module 230 may transmit data or instructions over a network to the client device. The transmitted data corresponds to the graphical user interface generated by the generation module 220. Effectively, the transmitted data is used to cause display of the generated graphical user interface.

In various example embodiments, the analysis module 240 analyzes the plurality of data points in accordance with a user interaction with the graphical user interface. The user interaction with the graphical user interface may include selection of an area, selection of a range of time, selection of interface objects rendered in the graphical user interface, or selection of a command or action from a menu that is displayed in the graphical user interface. The analysis module 240 then analyzes the plurality of data points based on, for example, the selected action from the menu, or any of the other selections. Therefore, the analysis module 240 generates a result in the graphical user interface based on the analysis of the plurality of data points.

In further example embodiments, the analysis module 240 identifies an amount of communication between each of the sensor devices. In particular, the analysis module 240 identifies an increase in an amount of communication between a first sensor device and a second sensor device. To accomplish this, the analysis module 240 measures an amount of data being sent between each of the sensor devices (e.g., number of messages, duration of calls, frequency of communication). Further, the analysis module 240 identifies a meeting location based on information about each of the plurality of data points included in the device component and based on the increase in amount of communication. Other functions of the analysis module 240 are further explained below.

In various example embodiments, the analysis module 240 identifies a type of data being communicated from the sensor device. For example, the types of data may include cell tower data and GPS data. Once identified, the analysis module 240 generates a depiction of the plurality of data points organized according to their data type. For example, a heat line generation may represent the cell tower data on a first line and the GPS data on a second line.

In various example embodiments, the tag module 250 tags each of the data points with additional information. For example, tags may include a description of an activity that is represented by the data point. The tags may associate the data point with a location that has been previously identified. In various example embodiments, the additional information is received by the tag module 250 from the client device or from the sensor device. Once tagged by the tag module 250, the additional information is stored into the database. Further, a mapping of the additional information to the respective data points is also stored in the database. The additional information may be depicted in the user interface as a label for the interface object, as further explained below.

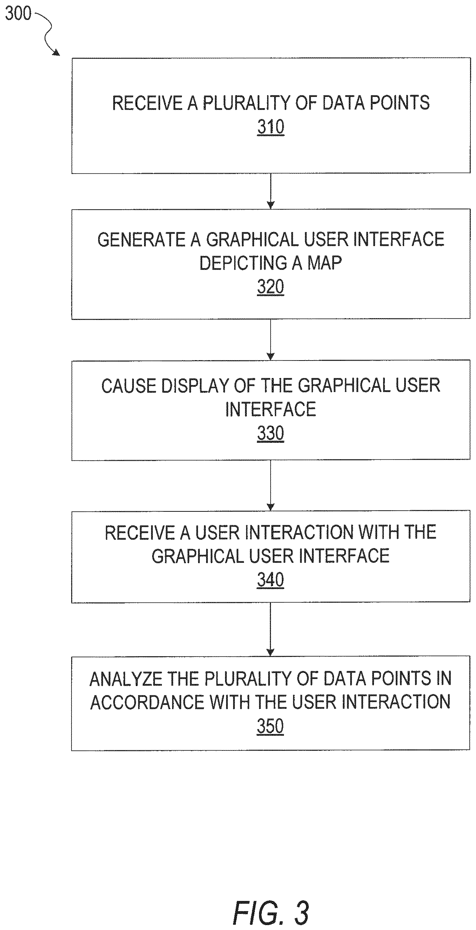

FIG. 3-5 are flowcharts illustrating operations of the interface system 150 in performing a method 300 of analyzing data in accordance with a user interaction, according to some example embodiments. Operations in the method 300 may be performed by the interface system 150, using modules described above with respect to FIG. 2. As shown in FIG. 3, the method 300 includes operations 310, 320, 330, 340, and 350.

At operation 310, the reception module 210 receives a plurality of data points (e.g., interactive map data). As stated above, the plurality of data points indicates activities performed by one or more users. Further, the plurality of data points are generated or measured using one or more sensor devices. In particular, each data point among the plurality of data points includes a geographical location component and a temporal component. The geographical location component indicates a geographical location (e.g., location coordinates, an address). The temporal component indicates a time (e.g., a calendar date, time of day). Accordingly, each data point indicates a location of a certain user at a time specified in the temporal component.

At operation 320, the generation module 220 generates a graphical user interface depicting a map of a geographical area that includes interface objects for each of the plurality of data points. In other words, the interface objects appear in the map of the geographical area as part of the map. Also, the generation module 220 is used to generate the interface objects for each of the plurality of data points. Accordingly, the geographical area corresponds to the plurality of data points received by the reception module 210 at operation 310. The interface objects represent activities performed by a user. For instance, the interface objects may correspond to an event that is being held at a certain location within the map of the geographical area.

At operation 330, the display module 230 causes display of the generated graphical user interface on a screen of the client device. Moreover, a user of the client device is able to interact with the generated graphical user interface. In various example embodiments, the graphical user interface includes a cursor that enables selection of an area or selection of interface objects from the geographical area depicted in the map. Moreover, movement of the cursor is controlled by user inputs received from the user operating the client device. In some instances, the screen of the client device is touch sensitive and the user of the client device can provide a user input by touching the screen of the client device. In further example embodiments, the map included in the user interface itself is selectable without the use of a cursor to indicate selection of areas from the map. In various example embodiments, the graphical user interface also includes a menu from which an action is selected or indicated by the user operating the client device. As an example, the menu may include an option to keep irrelevant data from being displayed within the graphical user interface.

At operation 340, the reception module 210 receives an indication of a user interaction with the graphical user interface. In some instances, the user interaction with the graphical user interface includes selection of the action from the menu displayed in the graphical user interface. Accordingly, the reception module 210 is configured to receive the selection of the action from the menu. In some instances, the user interaction with the graphical user interface includes movement of the cursor that enables selection of the area from the geographical area depicted in the map. Accordingly, the reception module 210 is configured to receive the selection of the area via the movement of the cursor. The user interaction, in some instances, also includes selection of the interface objects from the map. Accordingly, the reception module 210 is configured to receive the selection of the interface objects included in the map.

At operation 350, the analysis module 240 analyzes the plurality of data points in accordance with the user interaction. In various example embodiments, if a subset of the plurality of data points is selected, then the analysis module 240 performs the analysis on the selected subset of the plurality of data points. Identification of the subset of the plurality of data points is further explained below. Moreover, the analysis module 240 is further configured to generate a result in the graphical user interface based on the analysis of the plurality of data points, as further explained below.

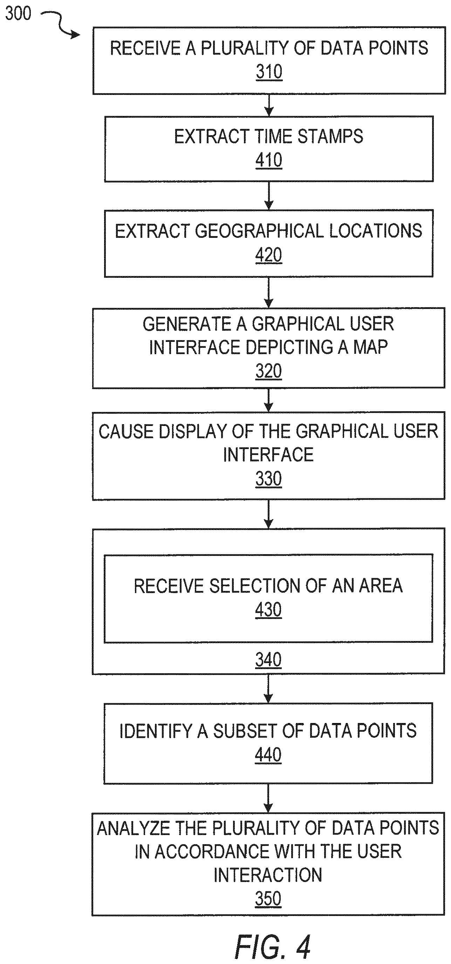

As shown in FIG. 4, the method 300 may include one or more of operations 410, 420, 430, and 440.

At operation 410, the reception module 210 retrieves one or more time stamps from the temporal component of each of the plurality of data points. The reception module 210, in some instances, parses the plurality of data points in order to retrieve the one or more time stamps from the plurality of data points. Effectively, the reception module 210 identifies the one or more time stamps from the temporal component of each of the plurality of data points.

At operation 420, the reception module 210 retrieves one or more geographical locations from the geographical location component of each of the plurality of data points. The reception module 210, in some instances, parses the plurality of data points in order to retrieve the one or more time stamps from the plurality of data points. Effectively, the reception module 210 identifies the one or more geographical locations from the geographical location component of each of the plurality of data points. Once retrieved, the analysis module 240 generates a description for each of the retrieved geographical locations. Further, the display module 230 may cause display of the generated description for each of the retrieved geographical locations.

At operation 430, which is a part of operation 340, the reception module 210 receives a selection of an area from the geographical area depicted in the map. As stated above, the graphical user interface may include a cursor that enables selection of the area. Accordingly, the reception module 210 receives the selection of the area via the cursor. Alternatively, the user may simply select the area by indicating the area on the map. In other words, the map displayed on the screen of the client device may be selectable, and the user simply performs a gesture over the area depicted the map (e.g., drawing a boundary around the area).

At operation 440, the analysis module 240 identifies a subset of data points that correspond to the area selected in operation 430. In other words, the subset of data points indicate locations that are within the area selected in operation 430. In further example embodiments, the subset of the plurality of data points are selected based on selection of an action from the menu. In further embodiments, the selection of the subset of data points may be performed by selecting the interface elements that correspond to the subset of data points from the map displayed in the graphical user interface (e.g., clicking on an interface element, touching an interface element).

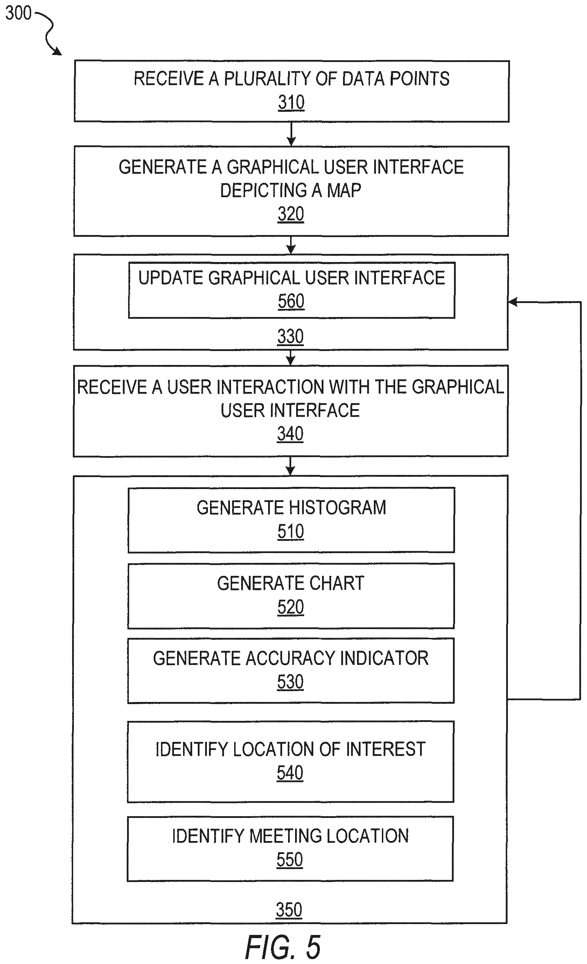

As shown in FIG. 5, the method 300 may include one or more of operations 510, 520, 530, 540, 550, and 560. In particular, the operations 510, 520, 530, 540, and 550 may be performed as part of the operation 350. Further, each of the operations 510, 520, 530, 540, and 550 may be performed by the analysis module 240 in response to the user interaction received at the operation 340. Also, the operation 560 may be performed as part of the operation 330.

At operation 510, the analysis module 240 generates a histogram that depicts a distribution of the plurality of data points (e.g., interactive map data). In various example embodiments, the plurality of data points are distributed based on the one or more sensor devices used to generate the plurality of data points. For example, if the plurality of data points are generated using source device A, source device B, and source device C, then the plurality of data points may be grouped in the histogram according to the device that generated the data point. Once generated, the histogram is displayed to the user in the graphical user interface by the display module 230. In various example embodiments, the display module 230 updates the graphical user interface to include the histogram. In some embodiments, the histogram is generated in response to a request to view the histogram. For example, the menu may include an action that the user selects to submit the request to view the histogram. Further, the histogram may correspond to only the subset of the plurality of data points that belong to the selected area from the geographical area.

At operation 520, the analysis module 240 generates a chart that depicts the geographical location component of each of the plurality of data points sorted in chronological order. In other words, the chart may depict a timeline of the locations of the plurality of data points. In further embodiments, the analysis module 240 generates a separate chart for each of the source devices being used to generate the plurality of data points. For example, if source device A and source device B are all of the devices being used to generate the plurality of data points, then the analysis module 240 generates a chart for source device A as well as a chart for source device B. Further, the generated chart may correspond to only the subset of the plurality of data points that belong to the selected area from the geographical area. Once generated, the chart is displayed to the user in the graphical user interface by the display module 230. In various example embodiments, the display module 230 updates the graphical user interface to include the chart. In some embodiments, the chart is generated in response to a request to view the chart. For example, the menu may include an action that the user selects to submit the request to view the chart.

At operation 530, the analysis module 240 generates accuracy indicators that correspond to the interface objects included in the geographical area. In some instances, a boundary that is drawn around an interface object depicted in the graphical user interface, and the boundary serves as an accuracy indicator for the interface object. Effectively, the boundary surrounding each interface object becomes the respective accuracy indicator for that interface object. As stated above, the interface objects are representations of the plurality of data points. Further, a size of the boundary is used to depict the accuracy of the interface object (e.g., smaller the boundary around the interface object, the more accurate the interface object). For example, in some embodiments, the analysis module 240 generates an ellipse around each of the interface objects depicted in the graphical user interface. Once the analysis module 240 generates the accuracy indicators, the display module 230 updates the graphical user interface to cause display of the accuracy indicators that corresponds to the interface objects.

At operation 540, the analysis module 240 identifies a location of interest. In various example embodiments, the location of interest is previously provided by a previous user such that information regarding the location of interest is readily available. Moreover, identification or information regarding the location of interest may be received by the reception module 210. In further embodiments, the information regarding the location of interest is stored in a database (e.g., database 126) maintained by the database server (e.g., database server 124). The previous user may indicate a selection of the location of interest from a graphical user interface displayed to the previous user. The previous user may also provide information regarding the location of interest such as a description about the location of interest, an image from the location of interest, an address of the location of interest, and the like. Once the analysis module 240 identifies the location of interest, the display module 230 updates the graphical user interface to cause display of the identified location of interest and the information regarding the location of interest (e.g., description about the location of interest, the image from the location of interest, the address of the location of interest). In various example embodiments, the location of interest is identified from the geographical area depicted in the map. This may include the selected area from the geographical area.

In further embodiments, the analysis module 240 matches a portion of the interface objects to the identified location of interest. To identify a match, the analysis module 240 determines that an interface object is located within a predetermined distance from the identified location of interest. Further, the matched portions of the plurality of interface objects may be highlighted by the display module 230. Accordingly, the matched portions of the plurality of interface objects will appear differently in the map interface as compared to other interface objects as a result of the highlighting by the display module 230.

In various example embodiments, the location of interest is identified from the plurality of data points received at operation 310. In particular, the analysis module 240 identifies a cluster or group data points from among the plurality of data points. For instance, the analysis module 240 identifies clusters or groups of data points that include at least a predetermined number of data points. Further, the identified group of data points are all be located within a predetermined distance from the location of interest. Accordingly, the analysis module 240 is further configured to determine that the identified group data points are all within the predetermined distance from the location of interest. For example, the location of interest may be a school or a workplace. Moreover, a group of data points correspond to activities of students that attend the school. As another example, the location of interest may be a workplace, and the analysis module 240 identifies a group of data points with locations that are within a predetermined distance from the workplace.

At operation 550, the analysis module 240 identifies a meeting location between two separate devices. As stated above, a plurality sensor devices may be used to generate the plurality of data points. Further, each of the plurality sensor devices may be operated by a different user. Therefore, meetings between users can be tracked from the plurality of data points that correspond to activities of the users. In particular, the analysis module 240 determines that a first sensor device and a second sensor device both share a location at a moment in time. In other words, the analysis module 240 determines that a first data point generated by the first sensor device and a second data point generated by the second sensor device both indicate a same location and time. As stated above, the device component of the data points indicate a respective device that generated the data point. Therefore, the identification of the meeting location may be based on the information included in the device component of the plurality of data points. Further, the identification of the meeting location may be based on the increase in amount of communication between the two separate devices. In other words, the analysis module 240 uses the increase in amount of communication as confirmation of the identified meeting location since users will often exchange messages with one another prior to a meeting.

In further example embodiments, the analysis module 240 determines that both the first sensor device and the second sensor device are at the shared location for a predetermined period of time. Once the analysis module 240 identifies the meeting location between two separate devices, the display module 230 updates the graphical user interface to cause display of the meeting location (e.g., the shared location). In various example embodiments, the analysis module 240 determines that a threshold number of data points indicate that the first sensor device and the second sensor device share the same location. In some cases, two users may coincidentally share the same location. As such, a threshold number of times or instances in which the two devices share the same location is used to determine that the two users are meeting with one another.

In further embodiments, the analysis module 240 identifies a common owner of one or more sensor devices. For instance, a single user may be operating two separate sensor devices. As a result, data generated by both sensor devices may be attributed to the single user.

At operation 560, the display module 230 updates the graphical user interface based on the analysis performed by the analysis module 240 at operation 350.

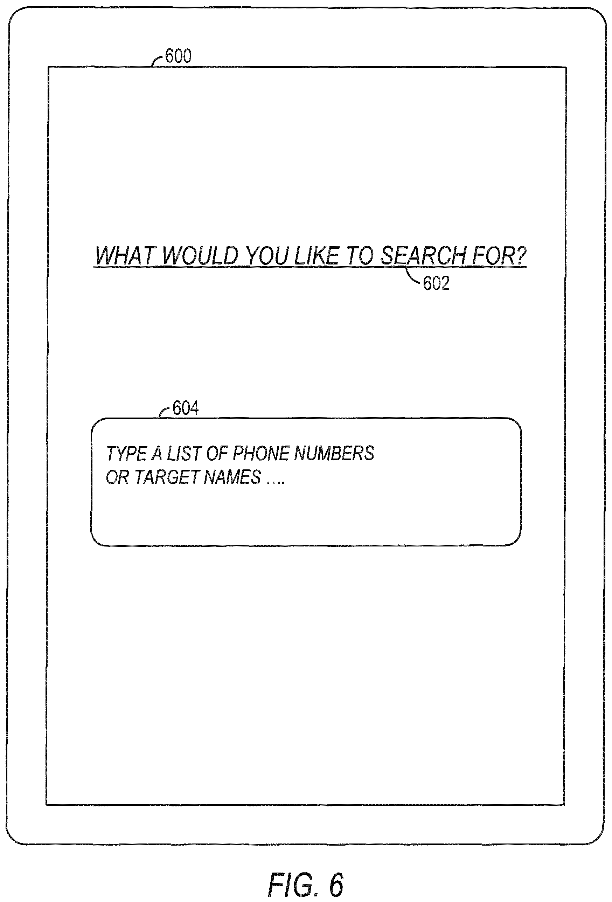

FIG. 6 depicts an example user interface 600 of the client device, according to some example embodiments. As shown in FIG. 6, the user interface 600 includes a description 602 and a search input field 604. The user interface 600 depicts a landing page where a user may enter a query into the search input field 604. The query entered into the search input field 604 triggers a display of a graphical user interface that includes a map with data that corresponds to the query entered into the search input field 604. For instance, the user may query a specific source device. Alternatively, the user may query a specific location in the search input field 604. The user may also query certain activities in the search input field 604. In various example embodiments, the search input field 604 is pre-populated with a suggested search. The suggested search may correspond to a cluster of interface objects that are located within a certain area. Therefore, the search input field 604 is pre-populated with a query term that retrieves the cluster of interface objects.

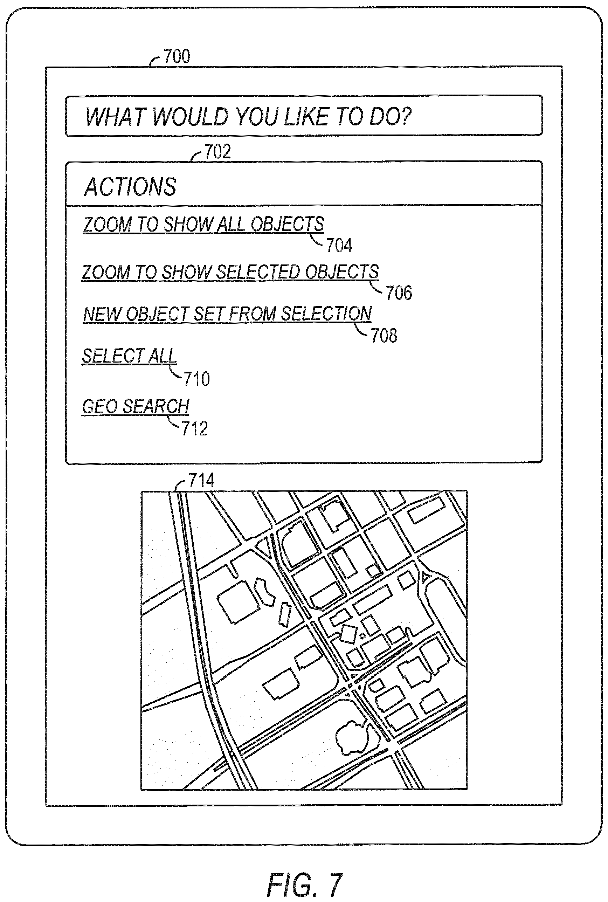

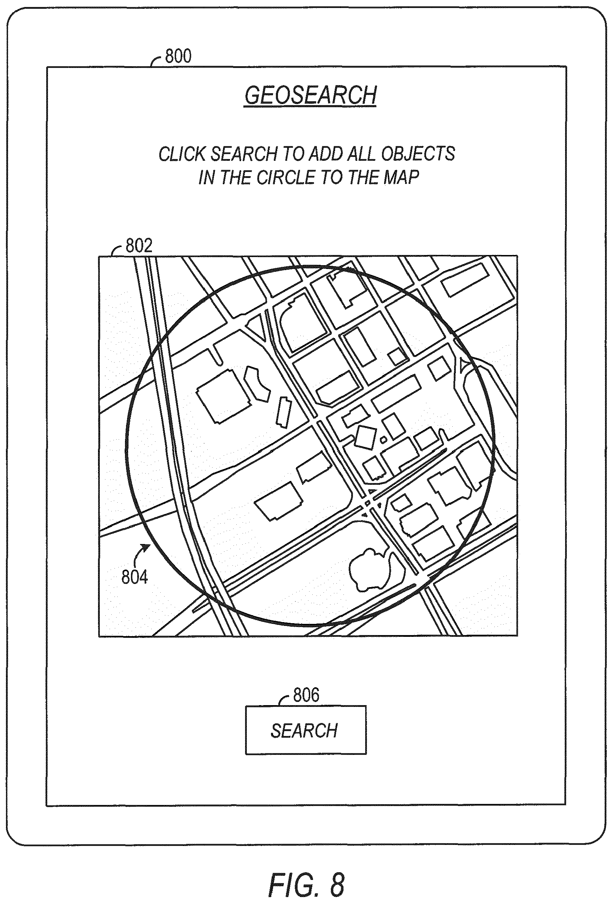

FIG. 7 depicts an example user interface 700 of the client device, according to some example embodiments. The user interface 700 includes a menu of actions 702 that enables a user to choose among a variety of actions including actions 704, 706, 708, 710, and 712. The user interface 700 further includes a map 714. The map 714 corresponds to query entered into the search input field 604 of FIG. 6. In other words, the map 714 may include data points that are generated by the source device entered into the search input field 604. The map 714 may depict a location that is entered into the search input field 604. Also, although not shown, the map 714 includes interface objects for data points that are generated by a source device. Each of the actions may be used to indicate a result. For instance, action 704 causes a zoom of an area on the map 714. Action 706 causes a zoom on interface objects selected from the map. Action 708 causes an object set to be created, allowing users to manually create references to a subset of data points which can be selected and filtered in aggregate. Action 712, if selected, may be used to perform a search (e.g., "geosearch") on a selected area from the map, as shown in FIG. 8. Action 710, if selected, may be used to select all of the interface objects that are on the map 714.

FIG. 8 depicts an example user interface 800 of the client device, according to some example embodiments. As shown in FIG. 8, the user interface 800 includes a map 802, an area selection 804, and a search button 806. The example user interface 800 depicts a search page. Moreover, the user interface 800 may be loaded in response to selection of the second action 706 of FIG. 7. From the search page, a user indicates a selection of a geographical area from the map 802. In some embodiments, FIG. 8 is shown in response to a query entered in the search input field 604 of FIG. 6. For example, the query entered into the search input field 604 of FIG. 6 may indicate one or more source devices that correspond to the map 802. Alternatively, the query entered into the search input field 604 of FIG. 6 may indicate an area that is depicted in the map 802. Further, the query entered into the search input field 604 may indicate an activity that is related to the map 802.

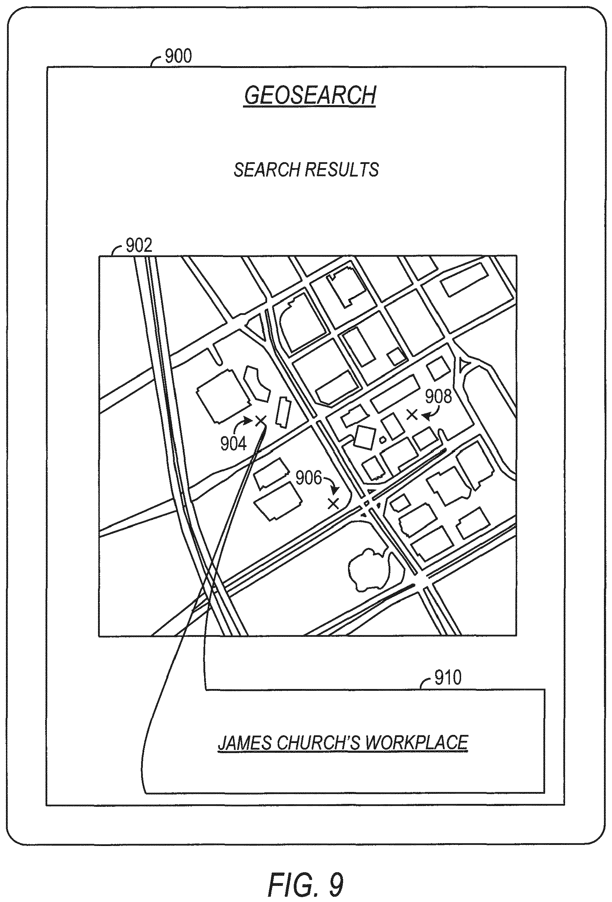

FIG. 9 depicts an example user interface 900 of the client device, according to some example embodiments. As shown in FIG. 9, the user interface 900 includes a map 902, a first interface object 904, a second interface object 906, a third interface object 908, and a label 910. Each of the interface objects 904, 906, and 908 represent a data point collected by a sensor device. Moreover, each of the interface objects 904, 906, and 908 are located within the selected area 804 of FIG. 8. In various example embodiments, the interface objects 904, 906, and 908 appear in map 902 as a result of being identified within the selected area 804 (e.g., operation 440 of FIG. 4). Further, the label 910 is depicted in FIG. 9 as being used to describe the interface object 904. The interface object 904 may be a location of interest and is therefore tagged using the label 910. As stated above, the location of interest may identified by the analysis module 240. Accordingly, the label 910 is used to provide information regarding the location of interest. In various example embodiments, the tag module 250 tags the information depicted in the label 910 with the data point represented by the interface object 904.

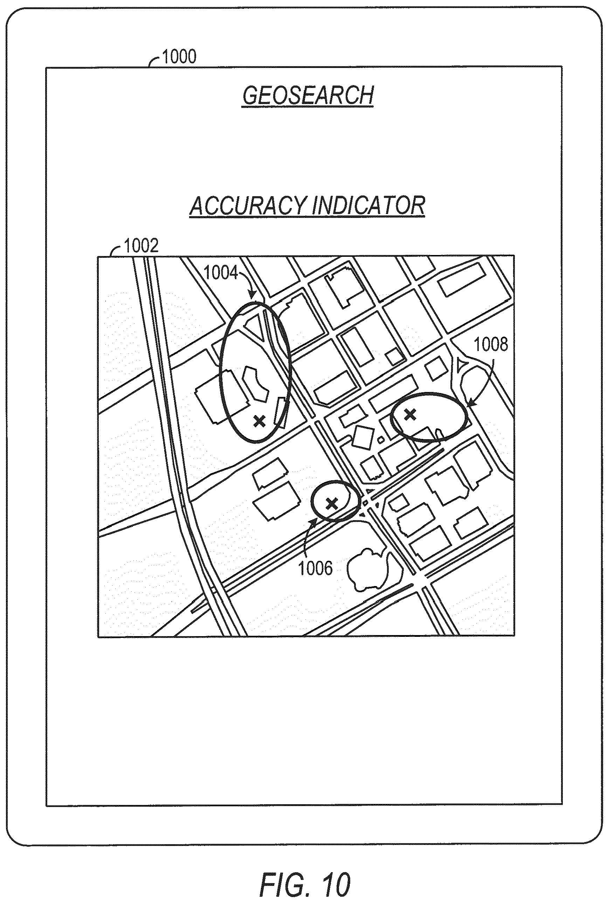

FIG. 10 depicts an example user interface 1000 of the client device, according to some example embodiments. As shown in FIG. 10, the user interface 1000 includes a map 1002 that depicts a first accuracy indicator 1004, a second accuracy indicator 1006, and a third accuracy indicator 1008. Each of the accuracy indictors are of different size and shape. Moreover, the size and shape of the accuracy indicators are used to indicate an accuracy of a corresponding interface object depicted in the map 1002. In some instances, a decrease in size of the accuracy indicator is correlated with an increase in the accuracy of the corresponding interface object (e.g., a location of the interface object). Accordingly, a large accuracy indicator corresponds to an interface object that is highly inaccurate. For example, an interface object with a highly inaccurate location may appear on the map with a large accuracy indicator surrounding the interface object.

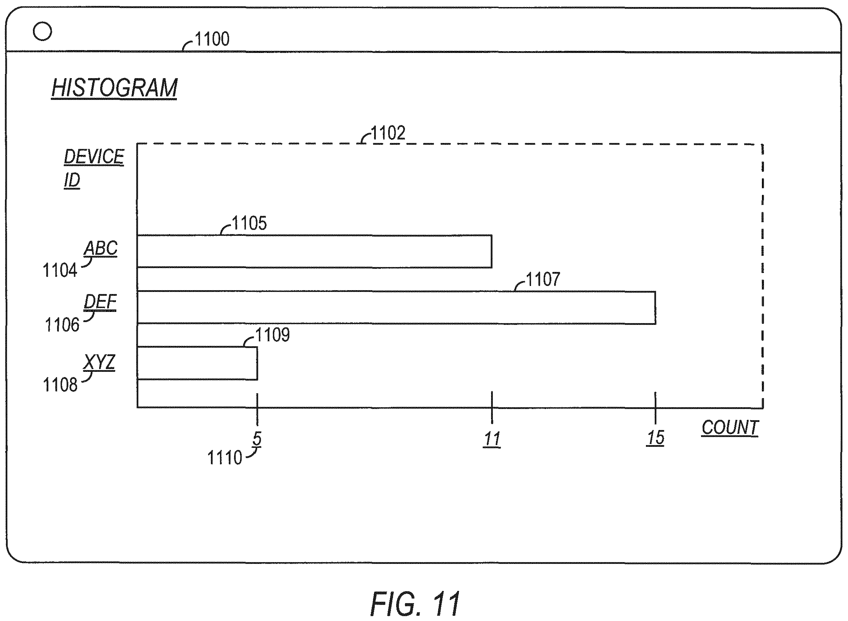

FIG. 11 depicts an example user interface 1100 displayed on the client device, according to some example embodiments. As shown in FIG. 11, the user interface 1100 includes a histogram chart 1102 with bars 1105, 1107, and 1109. Also included in FIG. 11 are device identifiers 1104, 1106, and 1108, and a numerical value 1110. The device identifiers 1104, 1106, and 1108 are displayed along a left side of the histogram chart 1102 to identify each of the bars shown in the histogram chart 1102. As depicted in FIG. 11, device identifiers 1104, 1106, and 1108 corresponds to bars 1105, 1107, and 1109 respectively. Moreover, the value 1110 indicates a number of data points that are generated by the device 1108 and depicted by the bar 1109. In various example embodiments, the example user interface 1100 is generated by the analysis module 240 in response to a user interaction with the graphical user interface (e.g., selection of an option to view a histogram).

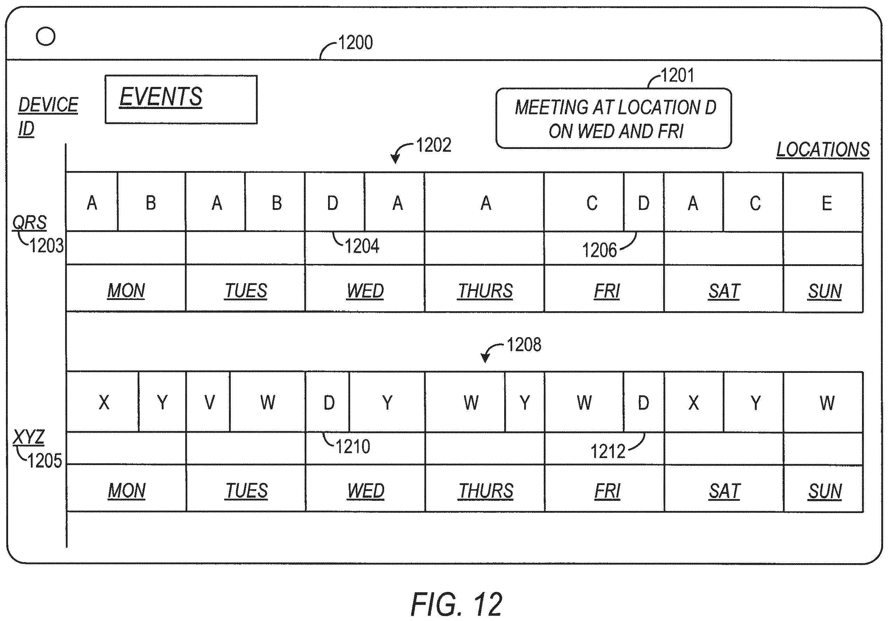

FIG. 12 depicts an example user interface 1200 displayed on the client device, according to some example embodiments. As shown in FIG. 12, the user interface 1200 includes a first chart 1202 and a second chart 1208. As also shown in FIG. 12, the user interface 1200 includes a first device identifier 1203 and a second device identifier 1205. The device identifiers 1203 and 1205 are displayed along a left side of the first chart 1202 and the second chart 1208. Moreover, the first device identifier 1203 corresponds to the first chart 1202 and the second device identifier 1205 corresponds to the second chart 1208. As shown in FIG. 12, the user interface 1200 further includes a description 1201 and segments 1204, 1206, 1210, and 1212. As shown, the first device and the second device share the same location on Wednesday and Friday, as indicated by segments 1204, 1206, 1210, and 1212. The analysis module 240 may identify the first device and the second device as sharing the same location based on the data points generated by each device. Moreover, the display module 230 causes display of the description 1201 to indicate that both devices share the same location. In various example embodiments, the example user interface 1200 is generated by the analysis module 240 in response to a user interaction with the graphical user interface (e.g., selection of an option to view chart).

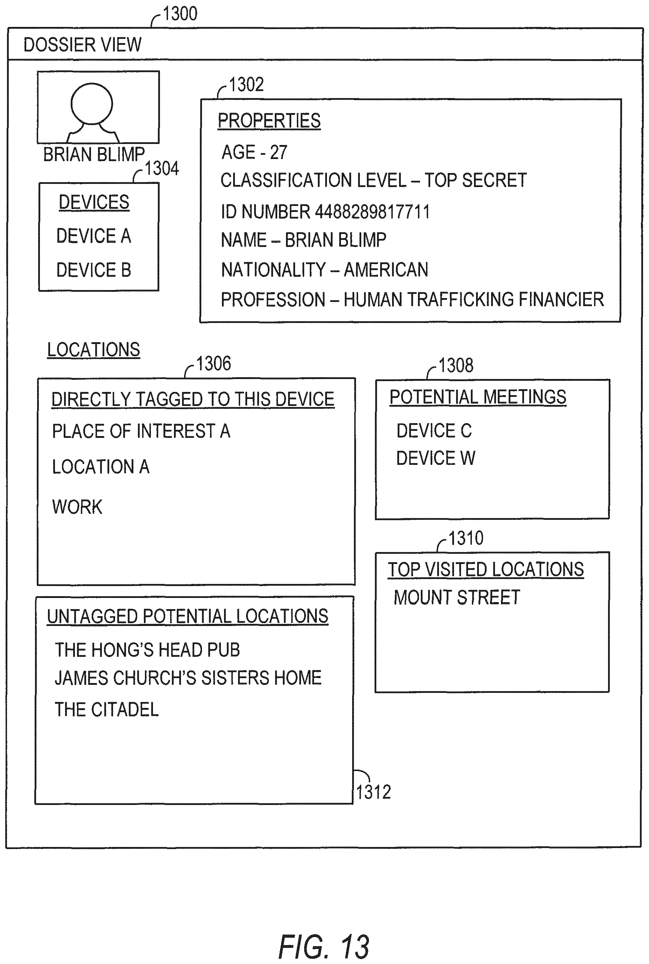

FIG. 13 is an example user interface 1300 that depicts a dossier page, according to some example embodiments. The dossier page indicates activities of a certain user as well as information about the certain user. As shown in FIG. 13, the dossier page includes a properties section 1302, a devices section 1304, a locations tagged section 1306, a potential meetings section 1308, a top visited locations section 1310, and an untagged locations section 1312. The properties section 1302 includes the information about the certain user. The devices section 1304 lists devices that are owned or operated by the certain user. Each of the devices may be or comprise a sensor device that is used to generate data points which pertain to user activities of the certain user. As stated earlier, the data points include time data and location data. Each of the remaining sections depicted in FIG. 13 (e.g., sections 1306, 1308, 1310, and 1312) display information from the data points which pertain to the activities of the certain user. The locations tagged section 1306 depicts locations that are identified as being visited by the user using the one of the sensor devices listed in the devices section 1304. The locations may have also been tagged with additional data. In this regard, the locations visited by the user are locations known to the system based on the additional data tags. The potential meetings section 1308 depicts other devices that share the same location as the devices of the certain user from the devices section 1304. The top visited locations section 1310 lists locations that are positively identified as being visited by the user the greatest number of times in comparison with other locations visited by the user, such as the ones listed in the locations tagged section 1306. The untagged potential locations 1312 are locations or data points with geographical location components that have not been tagged by the tag module 250.

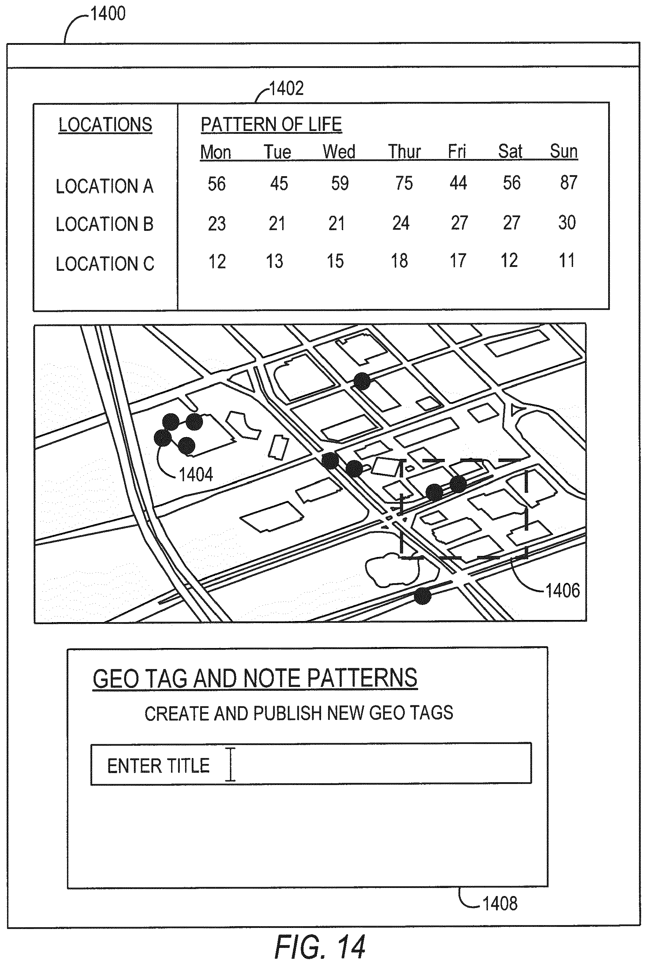

FIG. 14 is an example user interface 1400 of an interactive map, according to some example embodiments. As shown in FIG. 14, the user interface 1400 includes a first window 1402, an interactive map that includes an interface object 1404 and a selection of an area 1406, and a second window 1408. The first window includes information regarding the locations depicted in the interactive map. For example, each of the locations A, B, and C, as shown in the first window, corresponds to a data point. The data points are depicted in the interactive map as an interface object, such as the interface object 1404. The window also includes information about the activities that take place in each of the respective locations A, B, and C. For example, under the heading labeled "pattern of life" the numbers indicate a number of events that take place at each location during a certain day of the week. The selection of the area 1406 is used to select the interface objects that are included in a selected area. Once selected, the data points that are represented by the selected interface objects are retrieved from the database. As stated earlier, a user may indicate the selection of the area by interacting directly with an interactive map, such as the one depicted in FIG. 14. The second window 1408 facilitates or is used to enable the data points, such as the data points selected, to be tagged with additional information by the tag module 250. For example, the data points may be labeled with the additional information. Once tagged, the additional information may be stored in the database.

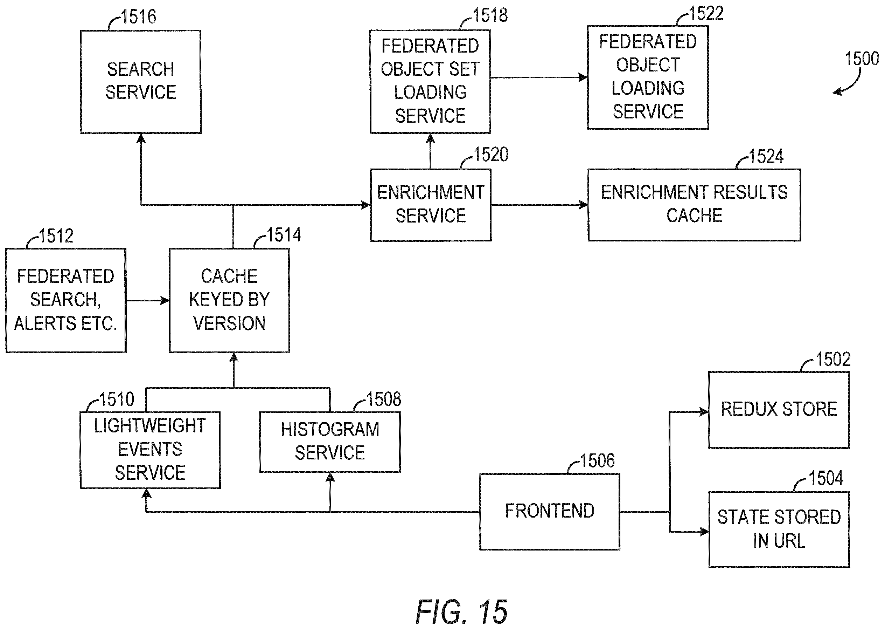

FIG. 15 is a flowchart illustrating an example architecture 1500 of a system that provides an interactive map interface, according to some example embodiments. As shown, FIG. 15 includes components 1502, 1504, 1506, 1508, 1510, 1512, 1514, 1516, 1518, 1520, 1522, and 1524. The component 1502 is a back-end component of the system and represents a "redux" storage that stores various data (e.g., entities, and devices and lightweight event). Component 1504 is also a back-end component of the system and represents one or more states that are stored in a URL (e.g., map ID and version number, and selection filters). The component 1506 is a component of the system and is used to signal the services provided by the front-end of the system. The components 1508 and 1510 are components that each represents services provided by the system on the front-end. Component 1508 represents a histogram service and component 1510 represents a lightweight events service. The histogram service provides a depiction of each the devices and an amount of data corresponding to each device. The histogram service includes the features described above with respect to the operation 510 of FIG. 5 and the user interface 1100 of FIG. 11. The lightweight events service may include any services related to events that are detected as being lightweight. A lightweight event may be events that have a fewer number of data points as compared to other events. Alternatively, the lightweight event may be events that have a fewer number of sensor devices as compared to other events.

The component 1512 represents at least one of a federated search, alerts, and the like. As an example, the federated search includes a search being used to locate data (e.g., AcmeLocators). The data is returned as a result of the performed federated search. In various example embodiments, the federated search supports fast identification based loads, which enables the search result (e.g., AcmeLocators) to be returned by a data source. In further embodiments, the federated search does not support fast identification based loads. As a result, the data or objects involved with the federated search may be cached as part of another portion of the system before the AcmeLocators are returned. The component 1514 represents a cache that is used to support the federated search as represented in component 1512. In various example embodiments, the cache represented by component 1514 is keyed based on a version of the system.

The component 1516 represents a further front-end search service provided by the system. The service includes providing query data and map data. The query data includes queries executed by the user on various other systems, such as the publication system 142. The map data includes information that represents layers of a map (e.g., map layers). The components 1518 and 1520 each represent additional front-end services that are provided by the system. The component 1518 represents a Federated Object Set Loading Service and component 1522 represents a Federated Object Loading Service. In order to request objects from these loading services, a set of enrichment identifiers need to be passed, which are also used for caching the objects.

The component 1520 represents an enrichment service responsible for taking a set of AcmeObjects and returning a modified set of AcmeObjects (e.g., AcmeObjectMutations). The modification to the AcmeObject is performed by the enrichment service using a sequence of sources (e.g., EnrichmentSources).

The component 1524 represents a process that is performed after the enrichment service. In particular, the component 1524 represents caching of the modified set of AcmeObjects (e.g., AcmeObjectMutations) returned by the enrichment service.

### MODULES, COMPONENTS, AND LOGIC

Certain embodiments are described herein as including logic or a number of components, modules, or mechanisms. Modules may constitute either software modules (e.g., code embodied on a machine-readable medium) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a Field-Programmable Gate Array (FPGA) or an Application Specific Integrated Circuit (ASIC). A hardware module may also include programmable logic or circuitry that is temporarily configured by software to perform certain operations. For example, a hardware module may include software executed by a general-purpose processor or other programmable processor. Once configured by such software, hardware modules become specific machines (or specific components of a machine) uniquely tailored to perform the configured functions and are no longer general-purpose processors. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software accordingly configures a particular processor or processors, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, with a particular processor or processors being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an Application Program Interface (API)).

The performance of certain of the operations may be distributed among the processors, not only residing within a single machine, but deployed across a number of machines. In some example embodiments, the processors or processor-implemented modules may be located in a single geographic location (e.g., within a home environment, an office environment, or a server farm). In other example embodiments, the processors or processor-implemented modules may be distributed across a number of geographic locations.

### EXAMPLE MACHINE ARCHITECTURE AND MACHINE-READABLE MEDIUM

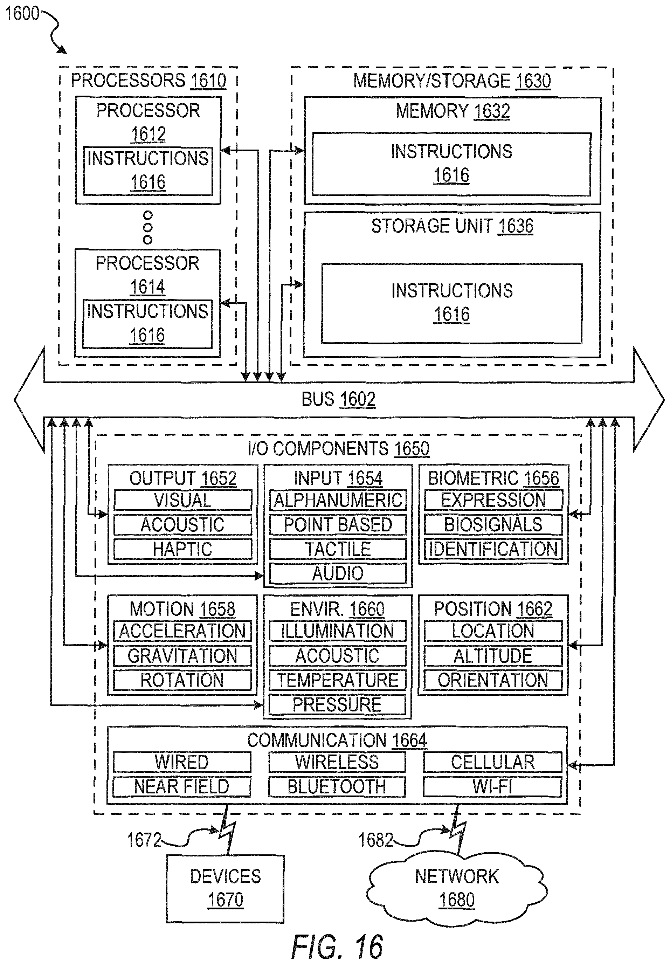

FIG. 16 is a block diagram illustrating components of a machine 1600, according to some example embodiments, able to read instructions from a machine-readable medium (e.g., a machine-readable storage medium) and perform any one or more of the methodologies discussed herein. Specifically, FIG. 16 shows a diagrammatic representation of the machine 1600 in the example form of a computer system, within which instructions 1616 (e.g., software, a program, an application, an applet, an app, or other executable code) for causing the machine 1600 to perform any one or more of the methodologies discussed herein may be executed. For example the instructions may cause the machine to execute the flow diagrams of FIG. 3-5. Additionally, or alternatively, the instructions may implement the modules of FIG. 2, and so forth. The instructions transform the general, non-programmed machine into a particular machine specially configured to carry out the described and illustrated functions in the manner described. In alternative embodiments, the machine 1600 operates as a standalone device or may be coupled (e.g., networked) to other machines. In a networked deployment, the machine 1600 may operate in the capacity of a server machine or a client machine in a server-client network environment, or as a peer machine in a peer-to-peer (or distributed) network environment. The machine 1600 may comprise, but not be limited to, a server computer, a client computer, a personal computer (PC), a tablet computer, a laptop computer, a smart phone, a mobile device, a wearable device (e.g., a smart watch), other smart devices, a network router, a network switch, a network bridge, or any machine capable of executing the instructions 1616, sequentially or otherwise, that specify actions to be taken by machine 1600. Further, while only a single machine 1600 is illustrated, the term "machine" shall also be taken to include a collection of machines 1600 that individually or jointly execute the instructions 1616 to perform any one or more of the methodologies discussed herein.

The machine 1600 may include processors 1610, memory 1630, and I/O components 1650, which may be configured to communicate with each other such as via a bus 1602. In an example embodiment, the processors 1610 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an Application Specific Integrated Circuit (ASIC), a Radio-Frequency Integrated Circuit (RFIC), another processor, or any suitable combination thereof) may include, for example, processor 1612 and processor 1614 that may execute instructions 1616. The term "processor" is intended to include multi-core processor that may comprise two or more independent processors (sometimes referred to as "cores") that may execute instructions contemporaneously. Although FIG. 16 shows multiple processors, the machine 1600 may include a single processor with a single core, a single processor with multiple cores (e.g., a multi-core process), multiple processors with a single core, multiple processors with multiples cores, or any combination thereof.

The memory/storage 1630 may include a memory 1632, such as a main memory, or other memory storage, and a storage unit 1636, both accessible to the processors 1610 such as via the bus 1602. The storage unit 1636 and memory 1632 store the instructions 1616 embodying any one or more of the methodologies or functions described herein. The instructions 1616 may also reside, completely or partially, within the memory 1632, within the storage unit 1636, within at least one of the processors 1610 (e.g., within the processor's cache memory), or any suitable combination thereof, during execution thereof by the machine 1600. Accordingly, the memory 1632, the storage unit 1636, and the memory of processors 1610 are examples of machine-readable media.

As used herein, "machine-readable medium" means a device able to store instructions and data temporarily or permanently and may include, but is not be limited to, random-access memory (RAM), read-only memory (ROM), buffer memory, flash memory, optical media, magnetic media, cache memory, other types of storage (e.g., Erasable Programmable Read-Only Memory (EEPROM)) and/or any suitable combination thereof. The term "machine-readable medium" should be taken to include a single medium or multiple media (e.g., a centralized or distributed database, or associated caches and servers) able to store instructions 1616. The term "machine-readable medium" shall also be taken to include any medium, or combination of multiple media, that is capable of storing instructions (e.g., instructions 1616) for execution by a machine (e.g., machine 1600), such that the instructions, when executed by one or more processors of the machine 1600 (e.g., processors 1610), cause the machine 1600 to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" excludes signals per se.

Furthermore, the machine-readable medium is non-transitory in that it does not embody a propagating signal. However, labeling the tangible machine-readable medium as "non-transitory" should not be construed to mean that the medium is incapable of movement - the medium should be considered as being transportable from one physical location to another. Additionally, since the machine-readable medium is tangible, the medium may be considered to be a machine-readable device.

The I/O components 1650 may include a wide variety of components to receive input, provide output, produce output, transmit information, exchange information, capture measurements, and so on. The specific I/O components 1650 that are included in a particular machine will depend on the type of machine. For example, portable machines such as mobile phones will likely include a touch input device or other such input mechanisms, while a headless server machine will likely not include such a touch input device. It will be appreciated that the I/O components 1650 may include many other components that are not shown in FIG. 16. The I/O components 1650 are grouped according to functionality merely for simplifying the following discussion and the grouping is in no way limiting. In various example embodiments, the I/O components 1650 may include output components 1652 and input components 1654. The output components 1652 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1654 may include alphanumeric input components (e.g., a keyboard, a touch screen configured to receive alphanumeric input, a photo-optical keyboard, or other alphanumeric input components), point based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components (e.g., a microphone), and the like.

In further example embodiments, the I/O components 1650 may include biometric components 1656, motion components 1658, environmental components 1660, or position components 1662 among a wide array of other components. For example, the biometric components 1656 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram based identification), and the like. The motion components 1658 may include acceleration sensor components (e.g., accelerometer), gravitation sensor components, rotation sensor components (e.g., gyroscope), and so forth. The environmental components 1660 may include, for example, illumination sensor components (e.g., photometer), temperature sensor components (e.g., one or more thermometer that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 1662 may include location sensor components (e.g., a Global Position System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1650 may include communication components 1664 operable to couple the machine 1600 to a network 1680 or devices 1670 via coupling 1682 and coupling 1672 respectively. For example, the communication components 1664 may include a network interface component or other suitable device to interface with the network 1680. In further examples, communication components 1664 may include wired communication components, wireless communication components, cellular communication components, Near Field Communication (NFC) components, Bluetooth® components (e.g., Bluetooth® Low Energy), Wi-Fi® components, and other communication components to provide communication via other modalities. The devices 1670 may be another machine or any of a wide variety of peripheral devices (e.g., a peripheral device coupled via a Universal Serial Bus (USB)).

Moreover, the communication components 1664 may detect identifiers or include components operable to detect identifiers. For example, the communication components 1664 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1664, such as, location via Internet Protocol (IP) geo-location, location via Wi-Fi® signal triangulation, location via detecting a NFC beacon signal that may indicate a particular location, and so forth.

### TRANSMISSION MEDIUM

In various example embodiments, one or more portions of the network 1680 may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi® network, another type of network, or a combination of two or more such networks. For example, the network 1680 or a portion of the network 1680 may include a wireless or cellular network and the coupling 1682 maybe a Code Division Multiple Access (CDMA) connection, a Global System for Mobile communications (GSM) connection, or other type of cellular or wireless coupling. In this example, the coupling 1682 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard setting organizations, other long range protocols, or other data transfer technology.

The instructions 1616 may be transmitted or received over the network 1680 using a transmission medium via a network interface device (e.g., a network interface component included in the communication components 1664) and utilizing any one of a number of well-known transfer protocols (e.g., hypertext transfer protocol (HTTP)). Similarly, the instructions 1616 may be transmitted or received using a transmission medium via the coupling 1672 (e.g., a peer-to-peer coupling) to devices 1670. The term "transmission medium" shall be taken to include any intangible medium that is capable of storing, encoding, or carrying instructions 1616 for execution by the machine 1600, and includes digital or analog communications signals or other intangible medium to facilitate communication of such software.

### LANGUAGE

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Although an overview of the subject matter has been described with reference to specific example embodiments, various modifications and changes may be made to these embodiments without departing from the broader scope of embodiments of the present disclosure. Such embodiments of the subject matter may be referred to herein, individually or collectively, by the term "invention" merely for convenience and without intending to voluntarily limit the scope of this application to any single disclosure or concept if more than one is, in fact, disclosed.

The embodiments illustrated herein are described in sufficient detail to enable those skilled in the art to practice the teachings disclosed. Other embodiments may be used and derived therefrom, such that structural and logical substitutions and changes may be made without departing from the scope of this disclosure. The Detailed Description, therefore, is not to be taken in a limiting sense, and the scope of various embodiments is defined only by the appended claims, along with the full range of equivalents to which such claims are entitled.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various embodiments of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of embodiments of the present disclosure as represented by the appended claims. The specification and drawings are, accordingly, to be regarded in an illustrative rather than a restrictive sense.

## Claims

1. A method comprising:
receiving a plurality of data points, each of the plurality of data points including a geographical location component and a temporal component detected by a sensor device;
generating, using one or more processors, a graphical user interface depicting a map of a geographical area that includes interface objects for at least some of the plurality of data points;
transmitting instructions that cause display of the generated graphical user interface on a screen of a client device;
receiving an indication of a user interaction with the graphical user interface displayed on the client device; and
analyzing the plurality of data points in accordance with the user interaction to generate a result in the graphical user interface.

2. The method of claim 1, further comprising:
generating a result in the graphical user interface based on the analyzing of the plurality of data points; and
transmitting instructions that cause display of the result in the graphical user interface on the client device.

3. The method of claim 1, further comprising:
generating the interface objects for each of the plurality of data points, the generated interface objects corresponding to activities of a user; and
including the generated interface objects in the map of the geographical area based on the geographical location components of the plurality of data points.

4. The method of claim 1, further comprising:
identifying one or more geographical locations from the geographical location component of each of the plurality of data points, wherein the identified one or more geographical locations are included in the geographical area depicted in the map; optionally further comprising:
transmitting instructions that cause display of a description for each of the identified one or more graphical locations in the graphical user interface.

5. The method of claim 1, wherein:
the graphical user interface includes a cursor that enables selection of an area from the geographical area depicted in the map; and
the receiving the indication of the user interaction includes receiving the selection of the area from the geographical area depicted in the map via the cursor.

6. The method of claim 1, further comprising identifying, from the plurality of data points, a subset of data points that correspond to the area selected from the geographical area; and wherein the analyzing includes analyzing the subset of data points to generate a result in the graphical user interface.

7. The method of claim 1, wherein:
the receiving includes receiving the plurality of data points from the sensor device and a further sensor device; and
the analyzing includes generating a histogram that depicts a distribution of the plurality of data points according to the sensor device and the further sensor device.

8. The method of claim 1, wherein the generating includes generating, in the map of the geographical area, accuracy indicators that correspond to the interface objects included in the geographical area; and wherein the method further comprises causing display of the accuracy indicators.

9. The method of claim 1, further comprising:
identifying one or more time stamps from the temporal component of each of the plurality of data points; and
generating, in the graphical user interface, a chart that depicts the geographical location component of each of the plurality of data points sorted in chronological order based on the one or more time stamps identified from the temporal component of each of the plurality of data points; optionally further comprising transmitting instructions that cause display of the chart that depicts the geographical location component of each of the plurality of data points sorted in chronological order.

10. The method of claim 1, wherein:
the receiving the indication of the user interaction includes receiving information that describes an activity corresponding to one of the plurality of data points; and
the method further comprises causing display of the information in the graphical user interface; and/or wherein:
the graphical user interface includes a menu that enables selection of an action; and
the receiving the indication of the user interaction includes receiving the selection of the action from the menu included in the graphical user interface.

11. The method of claim 1, wherein:
each of the plurality of data points is generated by a respective sensor device; and
each of the plurality of data points includes a device component that identifies, for each data point, a respective device that generated the data point; and/or, further comprising:
identifying an increase in an amount of communication between a first sensor device and a second sensor device; and
identifying a meeting location between the first sensor device and the second sensor device based on information about each of the plurality of data points included in the device component and based on the increase in amount of communication.

12. The method of claim 1, further comprising:
receiving an identification of a location of interest from the geographical area depicted in the map;
matching a portion of the interface objects to the identified location of interest; and
causing display of the identification of the location of interest in the graphical user interface; optionally wherein the causing display of the identification of the location of interest includes highlighting the matched portion of the interface objects.

13. A system comprising:
one or more processors and executable instructions accessible on a computer-readable medium that, when executed, configure the one or more processors to at least:
receive a plurality of data points, each of the plurality of data points including a geographical location component and a temporal component detected by a sensor device;
generate, using one or more processors, a graphical user interface depicting a map of a geographical area that includes interface objects for at least some of the plurality of data points;
transmit instructions that cause display of the generated graphical user interface on a screen of a client device;
receive an indication of a user interaction with the graphical user displayed on the client device; and
analyze the plurality of data points in accordance with the user interaction to generate a result in the graphical user interface.

14. The system of claim 13, wherein the one or more processors are further configured to:
generate a result in the graphical user interface based on the analysis of the plurality of data points; and
cause display of the result in the graphical user interface.

15. A non-transitory machine-readable medium storing instructions that, when executed by one or more processors of a machine, cause the machine to perform operations according to any of claim 1 to claim 12.
